# EUROPÄISCHE PATENTANMELDUNG

(11) **EP 2 472 138 A2**
(43) Veröffentlichungstag der Anmeldung: **04.07.2012**
(21) Anmeldenummer: 11194359.3
(22) Anmeldetag: 19.12.2011
(51) Int. Cl.: F16F 1/38, B62D 7/18

(54) **Lenkachse sowie Lagerbuchse hierfür**

(30) Priorität: 30.12.2010 DE 102010056471
(71) Anmelder: BPW Bergische Achsen KG, 51674 Wiehl (DE)
(72) Erfinder: Klaas, Thomas, 51580 Reichshof (DE); Flick, Joachim, 42499 Hückeswagen (DE)
(74) Vertreter: Christophersen & Partner

(57) **Zusammenfassung**

Die Lenkachse umfasst eine mindestens einen Lenkbolzen (5) aufweisende Achsfaust (2), einen Achsschenkelträger (10), welcher ein Fahrzeugrad drehbar aufnimmt und mit einem Gelenkauge (15A) den Lenkbolzen (5) umgibt, ein Axiallager (40) zur drehbeweglichen Übertragung der in Längsrichtung (7) des Lenkbolzens (5) wirkenden Kräfte auf die Achsfaust (2), und die zwischen dem Gelenkauge (15A) und dem Lenkbolzen (5) angeordnete Lagerbuchse (20).

Die selbstrückstellende Lagerbuchse (20) besteht aus einer drehfest in Bezug auf den Lenkbolzen (5) angeordneten Innenhülse (22), einer drehfest in Bezug auf das Gelenkauge (15A) angeordneten Außenhülse (21), und einem mit beiden Hülsen (22, 21) drehfest verbundenen, in Drehrichtung rückverformbaren Elastikelement (23).

Die Innenhülse (22) und die Außenhülse (21) sind zu ihrer jeweils drehfesten Anordnung jeweils mit mindestens einem in Bolzenlängsrichtung (7) trennbaren Formschlusselement (26.1 bzw. 25.1) versehen.

## Beschreibung

Die Erfindung betrifft eine Lenkachse, mit einer mindestens einen Lenkbolzen aufweisenden Achsfaust, einem Achsschenkelträger, welcher ein Fahrzeugrad drehbar aufnimmt und mit einem Gelenkauge den Lenkbolzen umgibt, einem Axiallager zur drehbeweglichen Übertragung der in Längsrichtung des Lenkbolzens wirkenden Kräfte auf die Achsfaust, und einer zwischen dem Gelenkauge und dem Lenkbolzen angeordneten, selbstrückstellenden Lagerbuchse, bestehend aus einer drehfest in Bezug auf den Lenkbolzen angeordneten Innenhülse, einer drehfest in Bezug auf das Gelenkauge angeordneten Außenhülse, und einem mit beiden Hülsen drehfest verbundenen, in Drehrichtung rückverformbarem Elastikelement.

Die Erfindung betrifft ferner, zur Verwendung mit einer derartigen Lenkachse, eine Lagerbuchse für die selbstrückstellende Lagerung eines ein Fahrzeugrad drehbar aufnehmenden und mit einem Gelenkauge versehenen Achsschenkelträgers auf einem Lenkbolzen, wobei die Lagerbuchse aus einer Innenhülse, einer Außenhülse, und einem mit beiden Hülsen drehfest verbundenen, in Drehrichtung rückverformbaren Elastikelement besteht.

Bei einer aus der WO 98/45158 bekannten Lenkachse ist die Montage und Demontage des kompletten Achsschenkelträgers einschließlich der selbstrückstellenden Lagerbuchse nur möglich, wenn zunächst der Lenkbolzen von der Achsfaust getrennt, d. h. aus der Achsfaust herausgezogen wird. Zu diesem Zweck sind an Lenkbolzen und Achsfaust korrespondierende Keilflächen vorgesehen, die sich bei entsprechendem axialen Druck trennen, woraufhin sich der Lenkbolzen aus der Achsfaust herausziehen lässt.

Ziel der Erfindung ist die Möglichkeit einer Demontage des Achsschenkelträgers und der selbstrückstellenden Lagerbuchse, ohne den Lenkbolzen entfernen zu müssen.

Zur **Lösung** wird eine Lenkachse mit den Merkmalen des Anspruchs 1 sowie eine Lagerbuchse mit den Merkmalen des Anspruchs 16 vorgeschlagen.

Durch diese Ausgestaltung wird im Rahmen der Demontage des kompletten Achsschenkelträgers die Möglichkeit geschaffen, das Radiallager, d.h. die komplette, selbstrückstellend ausgebildete Lagerbuchse zu entfernen, ohne dass hierzu der Ausbau auch des Lenkbolzens die Voraussetzung wäre. Da die Formschlusselemente an Innen- und Außenhülse durch ausschließlich axiales Abziehen der Innenhülse bzw. der Außenhülse trennbar sind, wird die Möglichkeit eröffnet, in baulich besonders einfacher Ausgestaltung den Lenkbolzen auch einstückig an der Achsfaust ausbilden zu können.

Vorteilhafte Ausgestaltungen der erfindungsgemäßen Lenkachse und der erfindungsgemäßen Lagerbuchse sind in den jeweiligen Unteransprüchen angegeben.

Gemäß einer Ausgestaltung ist das Formschlusselement der Innenhülse ein an der Stirnseite der Innenhülse angeformter Axialvorsprung, der in eine korrespondierende Axialausnehmung eingreift. Diese Axialausnehmung kann sich unmittelbar in der Achsfaust oder in deren Lenkbolzen befinden, oder in einer separaten, aber bezüglich der Achsfaust drehfest angeordneten Scheibe.

Die Außenhülse kann an ihrem einen Ende mit einem radialen, nach außen abstehenden Bund versehen sein. Das Formschlusselement der Außenhülse ist in diesem Fall mindestens eine Axialbohrung in dem radialen Bund, durch die jeweils eine Schraube hindurchgeführt ist, wobei diese Schraube in einer Stirnfläche des Gelenkauges verschraubt ist.

Um das axiale Herausziehen der Lagerbuchse bei festsitzender oder schwergängiger Innenhülse leichter und sicherer zu gestalten, weist gemäß einer weiteren Ausgestaltung die Außenhülse an ihrem der Achsfaust zugewandten Ende einen oder mehrere sich radial zu dem Lenkbolzen hin erstreckende Vorsprünge auf, mit denen die Außenhülse die Innenhülse hintergreift. Die Vorsprünge sind vorzugsweise durch Umformen des Hülsenmaterials hergestellte Laschen.

Mit einer weiteren Ausgestaltung wird vorgeschlagen, dass das Axiallager der Lenkachse gegen die Stirnseite des Lenkbolzens abgestützt ist, wobei vorzugsweise der Durchmesser des Axiallagers größer als der Durchmesser des Lenkbolzens ist.

Vorzugsweise setzt sich das Axiallager zusammen aus einer gegenüber dem Gelenkauge drehfesten ersten Scheibe, einer gegenüber dem Lenkbolzen drehfesten zweiten Scheibe, und einer mit beiden Scheiben drehfest verbundenen, torsionsfähigen Elastikscheibe, wobei die zweite Scheibe und der Lenkbolzen durch in Bolzenlängsrichtung vor- oder zurückspringende Formschlusselemente drehfest zueinander angeordnet sind.

Einzelheiten und weitere Vorteile ergeben sich aus dem nachfolgend anhand der Zeichnungen beschriebenen Ausführungsbeispiels einer Lenkachse. Auf den Zeichnungen zeigen:

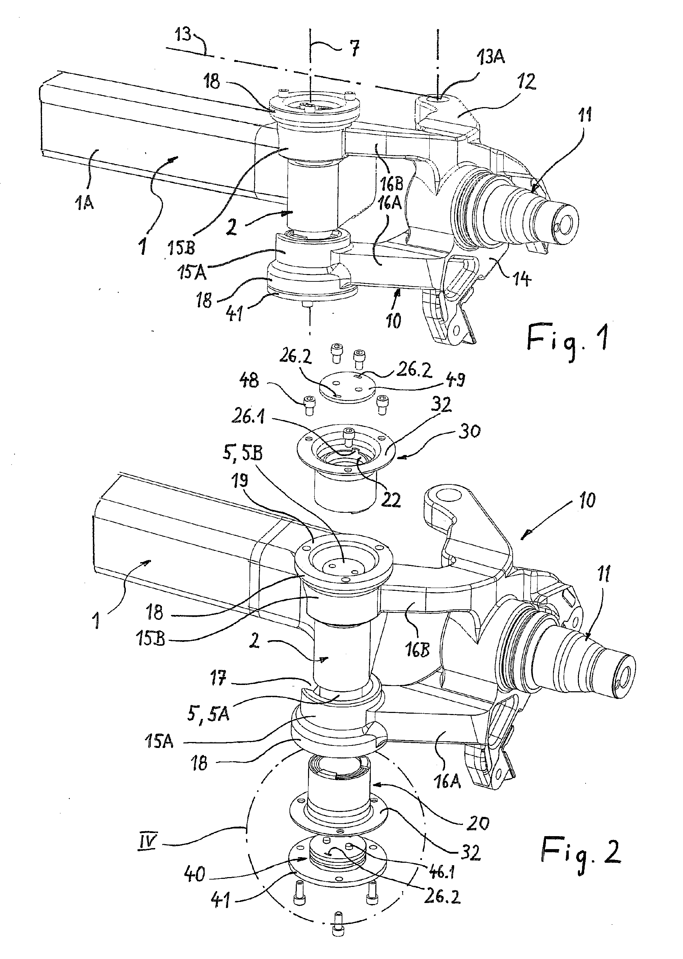

- Figur 1: in perspektivischer Darstellung das eine Ende einer Lenkachse, insbesondere einer Lenkachse eines Fahrzeuganhänger;
- Figur 2: in einer Explosionsdarstellung die Lenkachse mit daraus entnommenen Lagerbuchsen und weiteren Einzelteilen;
- Figur 3: einen Schnitt entlang des Achsschenkelbolzens durch die Lenkachse und die vergrößerte Einzelheit IV aus Fig. 2;
- Figur 4: eine perspektivische Darstellung der Lagerbuchse.

Die Lenkachse setzt sich in betriebsfertigem Zustand zusammen aus einem Achskörper 1, der hier als ein von der einen zur anderen Fahrzeugseite durchgehendes Achsrohr gestaltet ist, und der an seinen beiden Enden jeweils mit schwenkbar gelagerten Elementen der Lenkachse versehen ist. Auf der Zeichnung ist jeweils das eine Achsende mit dem dort schwenkbar angelenkten Elementen wiedergegeben.

Im Bereich seiner beiden Enden ist der Achskörper 1 als Achsfaust 2 gestaltet, die, wie dargestellt, in Bezug auf den gestreckten Mittelteil 1A des Achskörpers 1 an einem kurzen, abgewinkelten Endabschnitt des Achskörpers ausgebildet sein kann. Die Achsfaust 2 trägt den zylindrischen Lenkbolzen 5 der Lenkachse. Dieser ist zweigeteilt mit einem von der Achsfaust 2 nach unten ragenden ersten Lenkbolzenabschnitt 5A, und einem von der Achsfaust 2 nach oben ragenden, zweiten Lenkbolzenabschnitt 5B. Die beiden Lenkbolzenabschnitte 5A, 5B sind jeweils als Zapfen gestaltet. Um die Herstellkosten gering zu halten, kann es sich bei den Lenkbolzenabschnitten um Elemente handeln, die bei der Fertigung der Achsfaust 2 im selben Schmiedeprozess mit angeformt werden. Dies ermöglicht eine einstückige, unlösbare Gestaltung der Baugruppe aus Achsfaust 2 und Lenkbolzen 5.

Der Lenkbolzen 5 definiert die vertikale Schwenkachse 7 für einen Achsschenkelträger 10. Dieser nimmt auf einem Achsschenkel 11 die Wälzlagerung für das Fahrzeugrad und für die Bremsscheibe bzw. Bremstrommel auf. Der vorzugsweise als Schmiedeteil gefertigte Achsschenkelträger 10 ist einstückig mit einem Arm 12 versehen, an dessen Ende sich ein Gelenkauge 13A für die Spurstange 13 der Lenkachse befindet. Ferner ist einstückiger Bestandteil des Achsschenkelträgers 10 ein Bremsträger 14 einer Schwimmsattel-Scheibenbremse.

Für die Schwenklagerung gegenüber der Achsfaust 2 sind an dem Achsschenkelträger 10 ein unterer Anlenkarm 16A und ein oberer Anlenkarm 16B angeformt. Die Enden der beiden Anlenkarme 16A, 16B sind jeweils als ringförmig gestaltete Buchsenaufnahmen gestaltet, die daher einstückiger Bestandteil des Achsschenkelträgers 10 sind. Die Buchsenaufnahmen bilden nach unten und nach oben hin offene Gelenkaugen 15A, 15B, welche die Schwenklagerung aufnehmen.

Für die Funktion als Schwenkgelenk sind die Gelenkaugen 15A, 15B jeweils mit einer Durchgangsbohrung versehen. Die Gelenkaugen 15A, 15B sind nicht über ihre ganze Höhe als geschlossene Ringe gestaltet, sondern zu einer Seite hin mit einer Öffnung 17 versehen. Die Öffnung 17 erstreckt sich nur über eine axiale Höhe h, die Teil der Gesamthöhe des Gelenkauges 15A, 15B ist. Die Öffnungsweite dieser Öffnung 17 ist geringer als die entsprechende Breite von Lagerbuchse 20, 30 des Schwenklagers. Sie ist ferner größer als der Durchmesser des entsprechenden Lenkbolzenabschnitts 5A bzw. 5B.

Alternativ kann bei einer der beiden Gelenkaugen diese seitliche Öffnung fehlen. In diesem Fall muss die seitliche Öffnung 17 im anderen Gelenkauge eine umso größere Höhe aufweisen, die aber immer noch geringer als die Gesamthöhe H dieses Gelenkauges ist.

Die äußeren Stirnflächen 19 beider Gelenkaugen 15A, 15B sind jeweils als vollständige, das heißt geschlossene, Ringfläche gestaltet, die sich an einem verdickten und damit die Festigkeit erhöhenden Bund 18 des Gelenkauges 15A, 15B befindet. Da dieser Bund 18 ringförmig geschlossen ist, wird eine dennoch ausreichende Festigkeit der infolge der Öffnungen 17 im Prinzip geschwächten Gelenkaugen 15A, 15B erreicht.

In das untere Gelenkauge 15A ist von außen, also von unten her, eine untere selbstrückstellende Lagerbuchse 20, und in das obere Gelenkauge 15B ist von außen, also von oben her eine obere selbstrückstellende Lagerbuchse 30, jeweils in Bolzenlängsrichtung 7, einsetzbar. Die Lagerbuchsen 20, 30 sind zur Erzielung des Rückstelleffekts bei Auslenkung des Fahrzeugrades als in Drehrichtung rückverformende Stahl-Gummi-Stahl-Buchsen gestaltet.

Die Lagerbuchse 20 setzt sich zusammen aus einer gegenüber dem Gelenkauge 15A drehfesten Außenhülse 21, einer gegenüber dem Lenkbolzen 5 drehfesten Innenhülse 22, und einem mit beiden Hülsen 21, 22 drehfest verbundenen Elastikelement 23. Das Elastikelement 23 verformt sich bei relativer Verdrehung der Hülsen 21, 22 mit ansteigendem Widerstand und hat zudem die Fähigkeit, sich anschließend aufgrund seiner federndelastischen Materialeigenschaften vollständig zurück zu verformen.

Ebenso besteht auch die andere Lagerbuchse 30 aus einer gegenüber dem Gelenkauge 15B drehfesten Außenhülse 21, einer gegenüber dem Lenkbolzenabschnitt 5B drehfesten Innenhülse 22 und einem mit beiden Hülsen 21, 22 drehfest verbundenen, zweiten Elastikelement 23.

Die Außenhülse 21 der Lagerbuchse 20 sitzt drehfest aber axial herausziehbar in der Bohrung des Gelenkauges 15A. Dies wird durch Formschlusselemente 25.1 an einem nach außen abstehenden radialen Bund 32 der Außenhülse 21 einerseits, und durch korrespondierende Formschlusselemente 25.2 an dem Gelenkauge 15A andererseits erreicht. Die Formschlusselemente 25.1 sind über den Umfang des Bundes 32 verteilte, axial ausgerichtete Durchgangsöffnungen. Schrauben 47 führen durch diese Öffnungen hindurch und stellen den Formschluss 25.2 mit dem Gelenkauge 15A her. Der Vorteil dieser Anordnung der Formschlusselemente 25.1, 25.2 besteht darin, dass das Gelenkauge 15A lediglich eine glattzylindrische und damit einfach herstellbare Bohrung benötigt. Dies ist fertigungstechnisch vorteilhaft.

Die Formschlusselemente der Außenhülse 21 und des Gelenkauges 15A können alternativ auch als Keilverzahnung gestaltet sein. Auch in diesem Fall lassen sich diese zueinander undrehbaren Bauteile axial, d.h. in Bolzenlängsrichtung, auseinanderziehen und so voneinander trennen.

Die Innenhülse 22 der Lagerbuchse 20 sitzt drehfest aber axial trennbar auf dem Lenkbolzen 5. Dies wird erreicht durch im Eingriff stehende Formschlusselemente 26.1 an der Innenhülse 22 einerseits, und durch korrespondierende Formschlusselemente 26.2 an einer Scheibe 42 andererseits, wobei diese Scheibe 42 ihrerseits drehfest zu dem Lenkbolzen 5 ist. Die Formschlusselemente 26.1 sind einstückig an der Stirnseite der Innenhülse 22 angeformte Axialvorsprünge und vorzugsweise zinnenartig gestaltete Laschen. Die Formschlusselemente 26.2 sind Axialausnehmungen in der Scheibe 42, deren Gestalt in etwa der Gestalt dieser Laschen entspricht. Der Vorteil der Anordnung der Formschlusselemente 26.1, 26.2 außerhalb der Mantelfläche des Lenkbolzens 5 besteht darin, dass der Lenkbolzen bzw. sein Lenkbolzenabschnitt 5A glattzylindrisch gestaltet sein kann. Dies ist insbesondere dann fertigungstechnisch vorteilhaft, wenn der Lenkbolzen 5 aus einem Material mit der Achsfaust 2 hergestellt ist.

Aber auch wenn die Formschlusselemente der Innenhülse 22 und des Lenkbolzens 5 alternativ als Keilverzahnung gestaltet sind, lassen sich diese zueinander undrehbaren Bauteile axial, d. h. in Bolzenlängsrichtung, auseinanderziehen, und so einfach voneinander trennen.

Die Innenhülse 22 ist an ihrer zylindrischen Innenwandung mit einem Absatz oder einer Stufe 28 versehen. Beim vollständigen Aufschieben der Lagerbuchse 20 auf den Bolzenabschnitt 5A stößt der Absatz 28 axial gegen einen entsprechenden Vorsprung auf der Mantelfläche des Gelenkbolzens 5, und positioniert so die Innenhülse 22 in Bolzenlängsrichtung 7.

Die obere Lagerbuchse 30 ist ähnlich der unteren Lagerbuchse 20 gestaltet, d. h. ihre Außenhülse 21 sitzt drehfest aber axial herausziehbar in der Bohrung des Gelenkauges 15B. Dies wird wiederum durch korrespondierende Formschlusselemente 25.1 am angeformten Bund 32 der Außenhülse 21 einerseits, und an der Stirnfläche 19 des Gelenkauges 15B andererseits erreicht. Alternativ, wenngleich fertigungstechnisch weniger vorteilhaft, können auch hier die Formschlusselemente als Keilverzahnung gestaltet sein.

Die Innenhülse 22 der oberen Lagerbuchse 30 ist an ihrer Innenwandung ebenfalls mit einem axial wegbegrenzenden Absatz oder einer Stufe 28 versehen. Die Innenhülse 22 sitzt drehfest, aber axial trennbar auf dem Lenkbolzenabschnitt 5B. Dies wird erreicht durch im Eingriff stehende Formschlusselemente 26.1 an der Innenhülse 22 einerseits, und durch korrespondierende Formschlusselemente 26.2 an einer Scheibe 49 andererseits, wobei diese Scheibe 49 ihrerseits drehfest mit der Stirnseite 45B des Lenkbolzens 5 verschraubt ist. Die Formschlusselemente 26.1 sind einstückig an der Stirnseite der Innenhülse 22 angeformte Axialvorsprünge und vorzugsweise zinnenartig gestaltete Laschen. Die Formschlusselemente 26.2 sind Axialausnehmungen in der Scheibe 49, deren Gestalt in etwa der Gestalt dieser Laschen entspricht. Alternativ, wenngleich fertigungstechnisch weniger vorteilhaft, können die Formschlusselemente der Innenhülse 22 und des Lenkbolzens 5 wiederum als Keilverzahnung gestaltet sein.

Das aus Gummi bestehende Elastikelement 23 der Lagerbuchsen ist, vorzugsweise jeweils durch Vulkanisation, mit der Innenhülse 22 und der Außenhülse 21 verbunden und bildet eine hülsenförmige Schicht zwischen den beiden metallischen Hülsen 22, 21. Zur Verbesserung der Verformungsfähigkeit dieser elastomeren Schicht sowie der Fähigkeit zur Rückverformung ist in den Gummi des Elastikelements 23 mit radialem Abstand zu beiden Hülsen 22, 21 eine Stabilisierungshülse 29, ebenfalls aus Metall, eingebettet.

Die Außenhülse 21 der einen Lagerbuchse 20 ist an ihrem der Achsfaust abgewandten Ende mit dem radialen Bund 32 versehen, mit dem sie gegen die Stirnfläche 19 des Gelenkauges 15A anliegt. Auch die Außenhülse 21 der anderen Lagerbuchse 30 weist einen solchen radialen Bund 32 auf, mit dem sie gegen die andere Stirnfläche 19 anliegt.

Die Außenhülse 21 der Lagerbuchse 20 weist an ihrem der Achsfaust 2 zugewandten Ende mindestens einen sich radial zu dem Lenkbolzen 5 hin erstreckenden Vorsprung 33 auf, mit dem die Außenhülse 21 die Innenhülse 22 hintergreift.

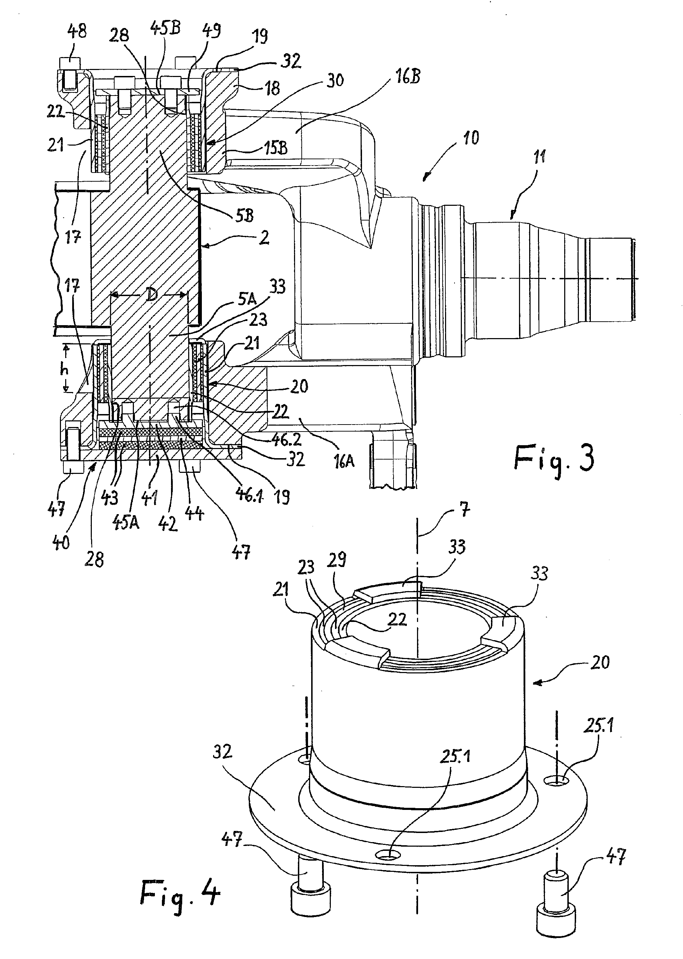

Fig. 4 lässt erkennen, dass beim Ausführungsbeispiel drei gleichmäßig über den Umfang verteilte Vorsprünge 33 an der Außenhülse 21 angeformt sind. Die Vorsprünge sind durch Umformen des Hülsenmaterials hergestellte Laschen. Die Innenkanten dieser Laschen bzw. Vorsprünge 33 weisen zur Vermeidung von Reibung einen geringen Radialabstand zu der zylindrischen Mantelfläche des Lenkbolzens 5 auf.

Zur Bereitstellung eines die anteiligen Fahrzeug-Gewichtskräfte aufnehmenden Axiallagers 40 ist unter dem Gelenkauge 15A eine erste Scheibe 41 befestigt, die als Lagerträger dient. Weitere Bestandteile des Axiallagers 40 sind die bereits erwähnte Scheibe 42, die drehfest bezüglich des Lenkbolzens 5 ist, sowie eine Elastikscheibe 43 zwischen der als Lagerträger dienenden ersten Scheibe 41 und der zweiten Scheibe 42. Die Elastikscheibe 43 besteht aus einem Gummimaterial und zeigt bei Torsion eine elastische Rückverformung.

Zur Verbesserung der Verformungsfähigkeit der elastomeren Schicht ist in das Gummimaterial der Elastikscheibe 43 mit radialem Abstand zu beiden Metallscheiben 41, 42 eine Stabilisierungsscheibe 44, ebenfalls aus Metall, eingebettet.

Die Elastikscheibe 43 ist mit jeder der beiden Scheiben 41, 42 drehfest verbunden, vorzugsweise durch Vulkanisation. Die zweite Scheibe 42 steht in Drehrichtung in Formschluss mit dem Lenkbolzen 5, indem in der Stirnseite 45A des Lenkbolzenabschnitts 5A, gegen den die Scheibe 42 axial anliegt, Sacklöcher 46.2 ausgebildet, in die entsprechende Zapfen 46.1 der Scheibe 42 axial eingreifen. Erreicht wird ein Formschluss der Scheibe 42 nur in Drehrichtung, so dass sich zur Montage und Demontage des Axiallagers 40 die Scheibe 42 ohne Weiteres von der Stirnfläche 45A des Lenkbolzens 5 entfernen lässt.

Die untere Scheibe 41 ist drehfest zu dem Gelenkauge 15A, indem sie mit diesem über die axial ausgerichteten Schrauben 47 verschraubt ist. Die Schrauben 47 durchgreifen außerdem den radialen Bund 32 der Außenhülse 21 und sichern diese so gegenüber Drehkräften.

Gemäß Fig. 3 ist der Durchmesser des Axiallagers 40 und insbesondere dessen Elastikscheibe 43 größer, als der Durchmesser D des Lenkbolzens 5 ist. Dieser große Durchmesser des Axiallagers 40 ist erwünscht, da dieses im Fahrbetrieb die anteiligen Fahrzeuggewichtskräfte trägt und daher hohen, auf die Fläche bezogenen Druckbelastungen ausgesetzt ist. Aus diesem Grunde ist es auch von Vorteil, dass sich das Gummimaterial der Elastikscheibe 43 über eine Kreisfläche über deren gesamten Durchmesser verteilt.

Die Außenhülse 21 der anderen Lagerbuchse 30 ist mittels der Schrauben 48 mit dem entsprechenden Gelenkauge 15B verschraubt, wobei diese Schrauben 48 geringeren Belastungen als die Schrauben 47 ausgesetzt sind. Gegen die obere Stirnseite 45B des Lenkbolzens 5 ist die zusätzliche Scheibe 49 verschraubt, die über den Durchmesser der Innenhülse 22 übersteht. Die zusätzliche Scheibe 49 sichert nicht nur mittels der Formschlusselemente 26.1, 26.2 die Innenhülse 22 gegen ein Verdrehen, sondern verhindert auch ein Eindringen von Schmutz und Staub von oben her in die obere Lagerbuchse 30.

Der Achsschenkelträger 10 lässt sich abnehmen, das heißt demontieren, ohne dass hierzu der Lenkbolzen 5 oder einer seiner beiden Lenkbolzenabschnitte aus der Achsfaust 2 entfernt werden müsste. Denn nach dem Lösen der Schrauben 47 lässt sich die Scheibe 41 in einer reinen Längsbewegung nach unten wegnehmen, und damit auch das ganze Axiallager 40 einschließlich seiner Elastikscheibe 43 und seiner oberen Scheibe 42, deren Zapfen 46.1 hierbei aus den Sacklöchern 46.2 des Lenkbolzens 5 herausgleiten.

Sodann lässt sich in einer reinen Längsbewegung durch Ziehen an der Außenhülse 21 die komplette Lagerbuchse 20 nach unten herausziehen. Bei diesem Herausziehen wird in jedem Fall auch die Innenhülse 22 mitgenommen, da die Vorsprünge 33 der Außenhülse 21 die Innenhülse 22 hintergreifen.

Ferner wird die obere Lagerbuchse 30 entfernt, wozu wiederum zunächst die oberen Schrauben 48 zu lösen sind, und die zusätzliche Scheibe 49 entfernt werden muss. Ist dies geschehen, lässt sich auch die obere Lagerbuchse 30 in einer ausschließlich axialen Bewegung wegziehen.

Durch das Entfernen der unteren Lagerbuchse 20 kommt die seitliche Öffnung 17 der Buchsenaufnahme 15A gegenüber dem Lenkbolzenabschnitt 5A frei. Dies ermöglicht, durch Verschwenken des Achsschenkelträgers 10 die untere Buchsenaufnahme 15A nach außen, bezogen auf die Achsfaust 2, wegzuziehen, wobei der Lenkbolzenabschnitt 5A nicht im Wege steht, sondern er durch die Öffnung 17, deren Weite größer als der Durchmesser des Lenkbolzenabschnitts ist, hinaustreten kann. Ist dies geschehen, lässt sich sodann der gesamte Achsschenkelträger 10 vertikal, das heißt im Wesentlichen in Richtung des Lenkbolzens 5, bewegen. Aufgrund dieser Bewegung kommt auch der andere Lenkbolzenabschnitt 5B aus der entsprechenden Buchsenaufnahme 15B vollständig frei. Dies ist besonders einfach, wenn auch die andere Buchsenaufnahme 15B mit einer seitlichen Öffnung 17 versehen ist.

Der Achsschenkelträger 10 lässt sich nach Entfernung der Lagerbuchsen 20, 30 zunächst auf die Achsfaust 2 absenken. Vor dem Absenken des Achsschenkelträgers 10 muss allerdings die Öffnung 17 gegenüber der Achsfaust 2 ausgerichtet werden, sodass deren Öffnungsseite über die Achsfaust 2 greifen kann. Die Öffnungen 17 können, müssen aber nicht bezüglich ihrer Winkellage fluchten, wenn die Weite der Öffnungen 17 deutlich weiter ist als die Breite der Faust 2.

Die erneute Montage des Achsschenkelträgers 10 erfolgt in umgekehrter Reihenfolge der Einzelschritte.

### Bezugszeichenliste

- 1: Achskörper
- 1A: Mittelteil
- 2: Achsfaust
- 5: Lenkbolzen
- 5A: Lenkbolzenabschnitt
- 5B: Lenkbolzenabschnitt
- 7: Bolzenlängsrichtung
- 10: Achsschenkelträger
- 11: Achsschenkel
- 12: Arm
- 13: Spurstange
- 13A: Auge
- 14: Bremsträger
- 15A: Gelenkauge
- 15B: Gelenkauge
- 16A: Anlenkarm
- 16B: Anlenkarm
- 17: Öffnung
- 18: Bund
- 19: Stirnfläche
- 20: Lagerbuchse
- 21: Außenhülse
- 22: Innenhülse
- 23: Elastikelement
- 25.1: Formschlusselement
- 25.2: Formschlusselement
- 26.1: Formschlusselement
- 26.2: Formschlusselement
- 28: Stufe
- 29: Stabilisierungshülse
- 30: Lagerbuchse
- 32: radialer Bund
- 33: Vorsprung
- 40: Axiallager
- 41: Scheibe
- 42: Scheibe
- 43: Elastikscheibe
- 44: Stabilisierungsscheibe
- 45A: Stirnseite
- 45B: Stirnseite
- 46.1: Zapfen
- 46.2: Sackloch
- 47: Schraube
- 48: Schraube
- 49: Scheibe

- D: Durchmesser
- h: Höhe der Öffnung

## Patentansprüche

1. Lenkachse, mit einer mindestens einen Lenkbolzen (5) aufweisenden Achsfaust (2), einem Achsschenkelträger (10), welcher ein Fahrzeugrad drehbar aufnimmt und mit einem Gelenkauge (15A) den Lenkbolzen (5) umgibt, einem Axiallager (40) zur drehbeweglichen Übertragung der in Längsrichtung (7) des Lenkbolzens (5) wirkenden Kräfte auf die Achsfaust (2), und einer zwischen dem Gelenkauge (15A) und dem Lenkbolzen (5) angeordneten, selbstrückstellenden Lagerbuchse (20), bestehend aus einer drehfest in Bezug auf den Lenkbolzen (5) angeordneten Innenhülse (22), einer drehfest in Bezug auf das Gelenkauge (15A) angeordneten Außenhülse (21), und einem mit beiden Hülsen (22, 21) drehfest verbundenen, in Drehrichtung rückverformbaren Elastikelement (23),
**dadurch gekennzeichnet,**
**dass** die Innenhülse (22) und die Außenhülse (21) zu ihrer jeweils drehfesten Anordnung jeweils mit mindestens einem in Bolzenlängsrichtung (7) trennbaren Formschlusselement (26.1 bzw. 25.1) versehen sind.

2. Lenkachse nach Anspruch 1, **dadurch gekennzeichnet, dass** die Formschlusselemente (26.1 bzw. 25.1) durch axiales Abziehen der Innenhülse (22) bzw. der Außenhülse (21) trennbar sind.

3. Lenkachse nach Anspruch 1 oder 2, **dadurch gekennzeichnet, dass** das Formschlusselement der Innenhülse (22) ein an der Stirnseite der Innenhülse (22) angeformter Axialvorsprung (26.1) ist.

4. Lenkachse nach Anspruch 3, **dadurch gekennzeichnet, dass** der Axialvorsprung (26.1) in eine korrespondierende Axialausnehmung (26.2) eingreift, die sich in der Achsfaust (2) oder in deren Lenkbolzen (5) oder in einer bezüglich der Achsfaust drehfest angeordneten Scheibe (42) befindet.

5. Lenkachse nach einem der vorangehenden Ansprüche, **dadurch gekennzeichnet, dass** sich das Formschlusselement (25.1) der Außenhülse (21) an einem Bund (32) befindet, mit dem die Außenhülse (21) an ihrem einen Ende versehen ist.

6. Lenkachse nach Anspruch 5, **dadurch gekennzeichnet, dass** das Formschlusselement (25.1) der Außenhülse (21) eine von einer Schraube (47) durchsetzte Axialbohrung in dem Bund (32) ist, und dass die Schraube (47) in einer Stirnfläche (19) des Gelenkauges (15A) verschraubt ist.

7. Lenkachse nach einem der vorangehenden Ansprüche, **dadurch gekennzeichnet, dass** die Außenhülse (21) an ihrem der Achsfaust (2) zugewandten Ende mindestens einen sich radial zu dem Lenkbolzen (5) hin erstreckenden Vorsprung (33) aufweist, mit dem die Außenhülse (21) die Innenhülse (22) hintergreift.

8. Lenkachse nach Anspruch 7, **dadurch gekennzeichnet, dass** an der Außenhülse (21) mehrere über den Umfang verteilte Vorsprünge (33) angeformt sind, und dass die Vorsprünge (33) durch Umformen des Hülsenmaterials hergestellte Laschen sind.

9. Lenkachse nach einem der vorangehenden Ansprüche, **dadurch gekennzeichnet, dass** in das Elastikelement (23) mit radialem Abstand sowohl zu der Innenhülse (22) als auch zu der Außenhülse (21) eine Stabilisierungshülse (29) eingebettet ist.

10. Lenkachse nach einem der vorangegangenen Ansprüche, **dadurch gekennzeichnet, dass** das Axiallager (40) gegen die Stirnseite (45A) des Lenkbolzens (5) abgestützt ist.

11. Lenkachse nach Anspruch 10, **dadurch gekennzeichnet, dass** sich das Axiallager (40) zusammensetzt aus einer drehfest in Bezug auf das Gelenkauge (15A) angeordneten ersten Scheibe (41), einer drehfest in Bezug auf den Lenkbolzen (5) angeordneten zweiten Scheibe (42), und einer mit beiden Scheiben (41, 42) drehfest verbundenen, torsionsfähigen Elastikscheibe (43), wobei die zweite Scheibe (42) und der Lenkbolzen (5) durch in Bolzenlängsrichtung (7) vor- oder zurückspringende Formschlusselemente (46.1, 46.2) drehfest zueinander angeordnet sind.

12. Lenkachse nach Anspruch 11, **dadurch gekennzeichnet, dass** in die Elastikscheibe (43) mit axialem Abstand sowohl zu der ersten (41), als auch zu der zweiten Scheibe (42) mindestens eine Stabilisierungsscheibe (44) eingebettet ist.

13. Lenkachse nach einem der vorangehenden Ansprüche, **dadurch gekennzeichnet, dass** der Durchmesser des Axiallagers (40) größer als der Durchmesser des Lenkbolzens (5) ist.

14. Lenkachse nach einem der Ansprüche 11 bis 13, **dadurch gekennzeichnet, dass** die erste Scheibe (41) mit einer nach außen weisenden Stirnfläche (19) des Lenkauges (15A) verschraubt ist.

15. Lenkachse nach Anspruch 14, **dadurch gekennzeichnet, dass** durch ein- und dieselbe Verschraubung sowohl die erste Scheibe (41) als auch die Außenhülse (21) mit der Stirnfläche (19) des Gelenkauges (15A) verschraubt ist.

16. Lagerbuchse (20) für die selbstrückstellende Lagerung eines ein Fahrzeugrad drehbar aufnehmenden und mit einem Gelenkauge versehenen Achsschenkelträgers auf einem Lenkbolzen, wobei die Lagerbuchse (20) aus einer Innenhülse (22), einer Außenhülse (21), und einem mit beiden Hülsen (22, 21) drehfest verbundenen, in Drehrichtung rückverformbaren Elastikelement (23) besteht,
**dadurch gekennzeichnet,**
**dass** die Innenhülse (22) und die Außenhülse (21) zu ihrer jeweils drehfesten Anordnung jeweils mit mindestens einem in Bolzenlängsrichtung trennbar gestalteten Formschlusselement (26.1 bzw. 25.1) versehen sind.

17. Lagerbuchse nach Anspruch 16, **dadurch gekennzeichnet, dass** das Formschlusselement der Innenhülse (22) ein an der Stirnseite der Innenhülse (22) angeformter Axialvorsprung (26.1) ist.

18. Lagerbuchse nach Anspruch 16 oder 17, **dadurch gekennzeichnet, dass** sich das Formschlusselement (25.1) der Außenhülse (21) an einem Bund (32) befindet, mit dem die Außenhülse (21) an ihrem einen Ende versehen ist.

19. Lagerbuchse nach Anspruch 18, **dadurch gekennzeichnet, dass** das Formschlusselement (25.1) der Außenhülse (21) eine Axialbohrung in dem Bund (32) ist.

20. Lagerbuchse nach einem der Ansprüche 16 bis 19, **dadurch gekennzeichnet, dass** die Außenhülse (21) an ihrem der Achsfaust (2) zugewandten Ende mindestens einen sich radial zu dem Lenkbolzen (5) hin erstreckenden Vorsprung (33) aufweist, mit dem die Außenhülse (21) die Innenhülse (22) hintergreift.

21. Lagerbuchse nach Anspruch 20, **dadurch gekennzeichnet, dass** an der Außenhülse (21) mehrere über den Umfang verteilte Vorsprünge (33) angeformt sind, und dass die Vorsprünge (33) durch Umformen des Hülsenmaterials hergestellte Laschen sind.

22. Lagerbuchse nach einem der Ansprüche 16 bis 21, **dadurch gekennzeichnet, dass** in das Elastikelement (23) mit radialem Abstand sowohl zu der Innenhülse (22) als auch zu der Außenhülse (21) eine Stabilisierungshülse (29) eingebettet ist.

23. Lagerbuchse nach einem der Ansprüche 16 bis 22, **dadurch gekennzeichnet, dass** die Innenhülse (22) an ihrer zylindrischen Innenwandung mit einer Stufe (28) versehen ist.
